# EUROPÄISCHE PATENTANMELDUNG

(11) **EP 1 063 179 A2**
(43) Veröffentlichungstag der Anmeldung: **27.12.2000**
(21) Anmeldenummer: 00112947.7
(22) Anmeldetag: 20.06.2000
(51) Int. Cl.: B65D 90/62, B65D 90/66, F16K 27/07, F16K 31/52

(54) **Vorrichtung zum Öffnen und Verschliessen einer Öffnung**

(30) Priorität: 23.06.1999 DE 19928626
(71) Anmelder: LIST AG, 4422 Arisdorf (CH)
(72) Erfinder: Kunz, Alfred, 4108 Witterswil (CH); Widmer, Andreas, 3012 Bern (CH); List, Jörg M., 4133 Pratteln (CH)
(74) Vertreter: Weiss, Peter, Dr. rer. nat.

(57) **Zusammenfassung**

Bei einer Vorrichtung zum Öffnen und Verschliessen einer Öffnung (1), insbesondere einer Austragsöffnung für ein fliess- oder rieselfähiges Produkt, mit einem Ventilteller (2) soll der Ventilteller (2) beim Öffnen der Öffnung (19 durch einen Kniehebelmechanismus (9) aus dem Bereich eines Produktstromes schwenkbar sein.

## Beschreibung

Die Erfindung betrifft eine Vorrichtung zum Öffnen und Verschliessen einer Öffnung, insbesondere einer Austragsöffnung für fliess- und rieselfähige Produkte, mit einem totraumarmen Ventilteller.

Produkte werden häufig in Behältern, z.B. Rührkessel, Reaktoren, Trockner, Silos verarbeitet und gelagert und werden von dort über eine untenliegende Öffnung ausgetragen. Diese Öffnung wird üblicherweise durch ein Ventil oder eine Klappe verschlossen. Diese Austragsvorrichtungen haben den Nachteil, dass der Ventilteller auch in geöffneten Zustand des Ventils im Produktstrom verbleibt und den Produktstrom stört, resp. bei schlecht fliessenden Produkten zu Verstopfungen führt.
Es sind auch Konstruktionen bekannt, bei welchen der Ventilteller exzentrisch gelagert wird und somit aus dem Produktstrom weggeschwenkt werden kann. Diese Konstruktionen haben aber den Nachteil, dass der Ventilteller wegen der exzentrischen Lagerung keine hohen Kräfte, z.B. aufgrund von Abdichtung gegen Druck, aufnehmen kann. Im weiteren können diese Konstruktionen wegen des Anpressdrucks nicht mit metallischen Liniendichtungen ausgerüstet werden.

Der vorliegenden Erfindung liegt die Aufgabe zugrunde, eine Vorrichtung der o.g. Art zu entwickeln, welche in Öffnungslage möglichst wenig den austretenden Produktstrom stört, in Schliesslage dagegen die Schliesskraft des Ventiltellers so gross ist, dass der Verschluss der Öffnung wesentlich verbessert wird.

Zur Lösung dieser Aufgabe führt, dass der Ventilteller beim Öffnen der Öffnung durch einen Kniehebelmechanismus aus dem Bereich eines Produktstromes wegschwenkbar ist.

Gegenüber einem Hubmechanismus hat der Kniehebelmechanismus den Vorteil, dass der Ventilteller auf mechanische Art und Weise aus dem Produktstrom geschwenkt werden kann. Bevorzugt ist hierzu der Ventilteller zusätzlich an einem Schwenkarm angeordnet, dessen Drehachse sich relativ weit oben nahe der Ebene der Öffnung befindet. Hierdurch wird gewährleistet, dass bei einem Schwenken des Ventiltellers dieser tatsächlich aus dem Bereich des Produktstromes herausgelangt.

Damit auch der Kniehebelmechanismus selbst den Produktstrom möglichst wenig stört, besteht der Kniehebelmechanismus zum einen aus einem bogenförmigen Joch, welches sich zwischen zwei sich gegenüberliegenden Lagern spannt, und einem gelenkig auf dem Scheitel des Joches angeordneten Hebel, der andern Endes mit dem Ventilteller verbunden ist. Das Joch hat den Vorteil, dass es in Öffnungslage den ausfliessenden Produktstrom umkreist, so dass es diesen Produktstrom nicht stört.

Beim Schliessen der Öffnung wird durch den Kniehebelmechanismus dagegen gewährleistet, dass der Ventilteller möglichst schnell in die Nähe der Öffnung gelangt und im letzten Schwenkweg den Ventilteller mit hoher Kraft gegen die Randkanten der Öffnung drückt. Dabei sollte der Scheitelpunkt des Kniehebels etwas überfahren werden, damit eine Endlage, in der der Ventilteller gegen die Randkante der Öffnung gepresst wird, abgesichert ist.

Auch bei einem Öffnen gewährleistet der Kniehebelmechanismus, dass die Öffnung noch während dem Schwenken des Kniehebelmechanismus relativ lange weitgehend verschlossen bleibt, dann aber eine relativ schnelle Öffnung erfolgt.

Das Drehen des Jochs kann im übrigen auf beliebige Art und Weise erfolgen. Hierzu können entsprechende manuelle, pneumatische, hydraulische oder elektrische Antriebe vorhanden sein.

Ein zweites wichtiges Merkmal der vorliegenden Erfindung bezieht sich auf das sichere Verschliessen der Öffnung mittels des Ventiltellers. Hierbei sind zwei Neuerungen erfindungsgemäss erwähnenswert. Die erste Neuerung bezieht sich darauf, dass dem Ventilteller eine Dreheinrichtung zugeordnet ist, welche den Ventilteller dann dreht, wenn er seinen Sitz in der Öffnung einnimmt. Das Drehen bewirkt, dass beispielsweise Produktankrustungen am Öffnungsrand weggeschabt werden. Zu diesem Zwecke kann es sich als ratsam erweisen, wenn eine Mantelfläche des Ventiltellers, die bevorzugt konisch ausgeformt ist, noch mit einem Hartmetallauftrag versehen wird.

In einem einfachen Ausführungsbeispiel soll die Dreheinrichtung mechanisch ausgestaltet sein. Hierzu ist der Ventilteller an einem drehbar gelagerten Drehzapfen angeordnet, von dem beispielsweise radial zumindest ein Führungsstift vorzugsweise aber mehrere abragen und in Kulissen eingreifen, die schräg verlaufen. Bei einer axialen Relativbewegung von Kulissen zu Drehzapfen wird somit der Drehzapfen und der Ventilteller um eine Längsachse gedreht.

In einem bevorzugten Ausführungsbeispiel sitzt der Drehzapfen in einer Hülse, wobei die Kulisse in der Hülsenwand selbst vorgesehen ist. Endwärtig stützt sich der Drehzapfen gegen ein Widerlager unter Zwischenschaltung einer Schraubenfeder ab. Dieses Widerlager ist im übrigen bevorzugt mit dem Hebel des Kniehebelmechanismus verbunden.

Das Widerlager und die Hülse sitzen in einem haubenförmigen Gehäuse und sind in diesem axial bewegbar. Die axiale Bewegung geschieht gegen die Kraft zumindest einer weiteren Schraubenfeder, gegen die sich das Widerlager gegen das Gehäuse abstützt.

Ein zweites wesentliches Merkmal der vorliegenden Erfindung, welche zur Verbesserung der Dichtigkeit der Öffnung beiträgt, ist, dass die Öffnung von zwei Dichtringen begrenzt wird, die zwischen sich einen Zwischenraum ausbilden. Dieser Zwischenraum steht mit einer Druckmediumquelle in Verbindung, so dass in den Zwischenraum ein Sperrmedium unter Druck eingeführt werden kann und dementsprechend ein Austreten des Behälterinhaits mit Sicherheit vermieden und die Dichtigkeit permanent überwacht werden kann.

Entsprechend der konischen Ausgestaltung des Drehtellers soll ein oberer Dichtring eine Öffnung mit einem geringeren Durchmesser umschliessen als ein unterer Dichtring. Wenn nun der konische Ventilteller in die Öffnung einfährt, biegt er den oberen Dichtring etwas nach oben, so dass hier bereits eine gute Dichtung zwischen einer bevorzugt ballig ausgeformten Randkante des oberen Dichtringes und dem Ventilteller erfolgt.

Der untere Dichtring wird weniger stark aufgebogen, wird jedoch bei Druckbeaufschlagung des Zwischenraumes auf die konische Mantelfläche des Ventiltellers aufgedrückt, so dass auch hier eine hervorragende Abdichtung entsteht.

In einem bevorzugten Ausführungsbeispiel der Erfindung soll im übrigen der Druck, mit dem der Zwischenraum beaufschlagt wird, und die Menge des Druckmediums ermittelt werden. Ein Verlust an Druckmedium gibt eine Angabe darüber, wie der Zustand der Dichtung zwischen den Dichtringen und dem Ventilteller ist.

Als Druckmedium wird bevorzugt Stickstoff verwendet, jedoch sind auch andere produktverträgliche und inerte Medien anwendbar.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch eine erfindungsgemässe Vorrichtung zum Öffnen und Verschliessen einer Öffnung;
Figur 2 einen vergrössert dargestellten Querschnitt durch eine erfindungsgemässe Dreheinrichtung;
Figur 3 einen vergrössert dargestellten Teilquerschnitt durch die Vorrichtung gemäss Figur 1, nämlich die doppelten Dichtringe mit Zwischenraum für die Sperrung mit einem Druckmedium.

Eine erfindungsgemässe Vorrichtung zum Öffnen und Verschliessen einer Öffnung 1 weist einen Ventilteller 2 auf, der mit einem später beschriebenen Drehzapfen 3 in einem Gehäuse 4 sitzt. Das Gehäuse 4 ist über einen Schwenkarm 5 mit einer Drehachse 6 verbunden, welche ortsfest in einem Gehäuse 7 gelagert ist. Eine Bewegung des Schwenkarmes 5 wird durch einen Anschlag 8 begrenzt.

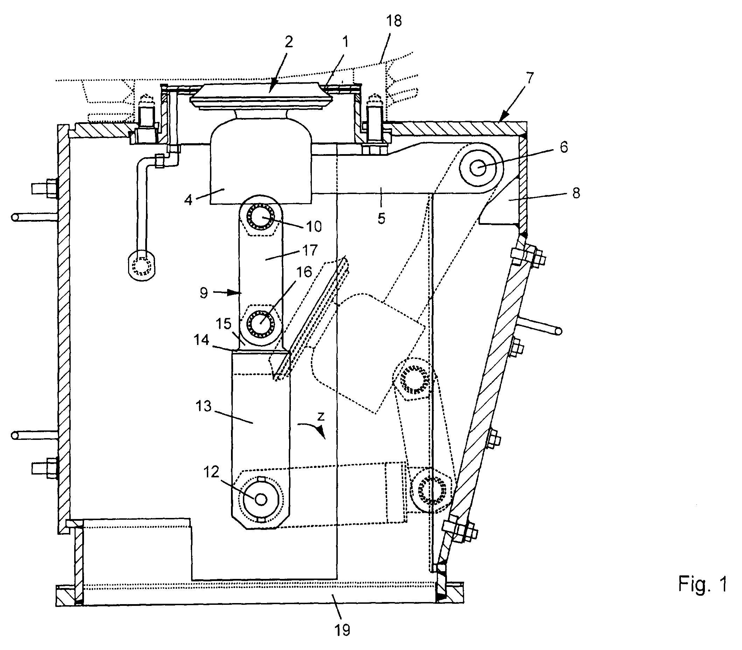

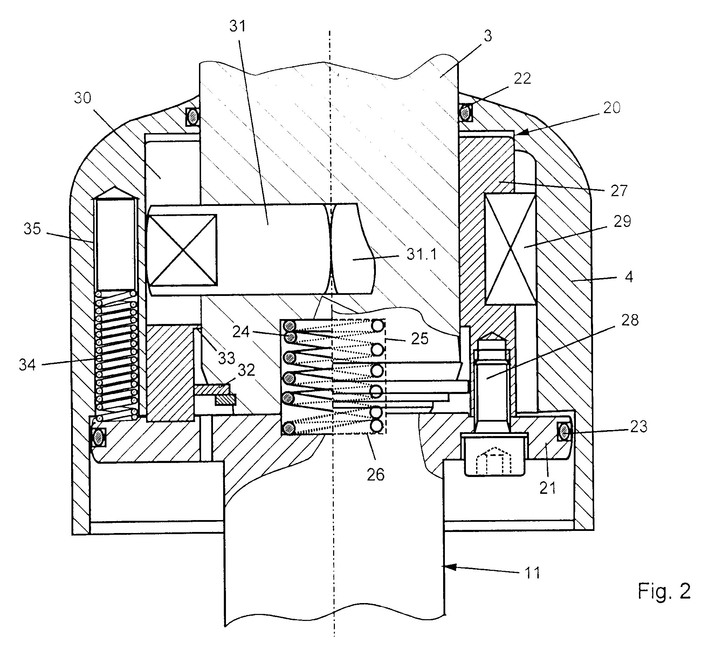

Etwa im rechten Winkel zu dem Schwenkarm 5 ist in Schliesslage des Ventiltellers 2 ein Kniehebelmechanismus 9 angeordnet, der einerseits über ein Drehgelenk 10 mit einem in Figur 2 gezeigten Widerlager 11 verbunden ist und andererseits in zwei sich gegenüberliegenden Lager 12 gelagert ist, wobei in Figur 1 nur ein Lager 12 gezeigt ist. Zwischen den beiden sich gegenüberliegenden Lagern 12 spannt sich bogenförmig ein Joch 13, auf dessen Scheitel 14 eine Lasche 15 für eine gelenkige Verbindung 16 mit einem Hebel 17 vorgesehen ist.

Die Funktionsweise der vorliegenden Erfindung ist folgende:

In Figur 1 ist die Schliessstellung des Ventiltellers 2 in der Öffnung 1 gezeigt. Oberhalb der Öffnung 1 ist ein Behälter 18 für bspw. ein rieselfähiges Produkt gestrichelt dargestellt.

Soll dieses rieselfähige Produkt aus dem Behälter 18 durch die Öffnung 1 und aus dem Gehäuse 7 durch eine untere Austragsöffnung 19 ausgetragen werden, so dreht ein nicht näher gezeigter Antrieb das Joch 13 in den Lagern 12 in Richtung z. Dabei nimmt das Joch 13 den Hebel 17 und dieser das Gehäuse 4 und den Ventilteller 2 mit, wobei das Gehäuse 4 und der Ventilteller 2 um die Drehachse 6 geschwenkt werden.

Die Öffnungslage des Ventiltellers 2 ist gestrichelt angedeutet. In dieser Öffnungslage befindet sich der Ventilteller 2 und das Gehäuse 4 zwar noch teilweise im Produktstrom, jedoch sind die meisten Flächen schräg gestellt, so dass eine geringstmögliche Störung des Produktstromes gewährleistet ist. Ebenfalls befindet sich durch die bogenartige Ausgestaltung das Joch auch weitgehend ausserhalb des nach unten rieselnden Produktstromes.

Um den Ventilteller 2 in Schliesslage zu bringen, erfolgt ein entgegengesetztes Drehen des Jochs 13 in die in Figur 1 gezeigte Stellung. Da sich die Drehachse 6 etwa auf der Höhe des Gehäuses 4 befindet und der Ventilteller 2 parallel zu dem Schwenkarm 5 verläuft, erfolgt ein exaktes Einsetzen des Ventiltellers 2 in die Öffnung 1.

Um dieses eben erwähnte Einsetzen des Ventiltellers 2 in die Öffnung 1 noch zu verbessern, ist dem Ventilteller 2 bevorzugt eine Dreheinrichtung 20 zugeordnet, wie sie in Figur 2 näher gezeigt ist. Die Dreheinrichtung 20 befindet sich dabei in dem haubenartigen Gehäuse 4, welches gleichzeitig die Dreheinrichtung 20 gegen das rieselfähige Produkt schützt. Zu diesem Zweck ist auch das Gehäuse 4 gegenüber dem Drehzapfen 3 und gegenüber einem Flansch 21 des Widerlagers 11 durch Dichtringe 22 und 23 abgedichtet.

Der Drehzapfen 3 stützt sich über eine Schraubenfeder 24 gegen das Widerlager 11 ab, wobei die Schraubenfeder 24 sowohl in einem Sackloch 25 als auch in einem Sackloch 26 des Drehzapfens 3 bzw. des Widerlagers 11 aufgenommen ist.

Der Drehzapfen 3 wird von einer Hülse 27 umfangen, die über einen Schraubenbolzen 28 mit dem Flansch 21 verbunden ist. Zum Gehäuse 4 hin stützt sich die Hülse 27 über eine Passfeder 29 ab.

Die Hülse 27 weist ferner eine Kulisse 30 auf, die aus einem einfachen Schrägschlitz in der Hülse 27 bestehen kann. In die Kulisse 30 greift ein Führungsstift 31 ein, der radial in den Drehzapfen 3 eingesetzt ist. Durch die Bezugszahl 31.1 wird angedeutet, dass radial mehrere derartige Führungsstifte 31 verteilt in dem Drehzapfen 3 sitzen können, wobei dann in der Hülse 27 die Kulisse 30 auch mehrfach ausgeführt ist.

Ein Herausgleiten des Drehzapfens 3 aus der Hülse 27 wird durch einen Sprengring 32 vermieden, der an einer Innenschulter 33 in der Hülse 27 anschlägt.

Auch das Widerlager 11 bzw. dessen Flansch 21 stützt sich gegen eine Schraubenfeder 34 ab, die in einer Sacklochbohrung 35 in dem Gehäuse 4 sitzt.

Die Funktionsweise der erfindungsgemässen Dreheinrichtung ist folgende:

Gegen Ende der Drehbewegung des Jochs 13 nähert sich der Ventilteller 2 der Öffnung 1. Durch die Schraubenfedern 34 und 24 ist der Drehzapfen 3 weitgehend ausgefahren, so dass es schon relativ früh vor dem Ende der Drehbewegung des Kipphebelmechanismuses 9 zu einem Schliessen der Öffnung 1 kommt. Da die Schraubenfeder 34 schwächer ausgebildet ist als die Schraubenfeder 24, wird der Ventilteller 2 zuerst mit einem geringeren Druck gegen die Innenkante der Öffnung 1 gepresst und der Ventilteller 2 über den Drehzapfen 3 durch das Führen des Führungsstiftes 31 in der Kulisse 30 gedreht.

Nach einem kurzen Weg des Widerlagers 11 wirkt jedoch auch die Schraubenfeder 24, wobei der Ventilteller 2 fester gegen die Randkante der Öffnung 1 gepresst und entlang dieser Randkante gedreht wird. Hierdurch können auch stärkere Ankrustungen weggeschabt werden.

Die Dreheinrichtung 20 gewährleistet im übrigen auch, dass bei einem Öffnen der Öffnung 1 der Ventilteller 2 die Öffnung 1 solange wie möglich verschliesst, bis der Kniehebelmechanismus 9 schon einen erheblichen Teil seines Drehweges zurückgelegt hat. Dadurch findet kaum eine Beeinträchtigung des auszutragenden Produktstromes statt.

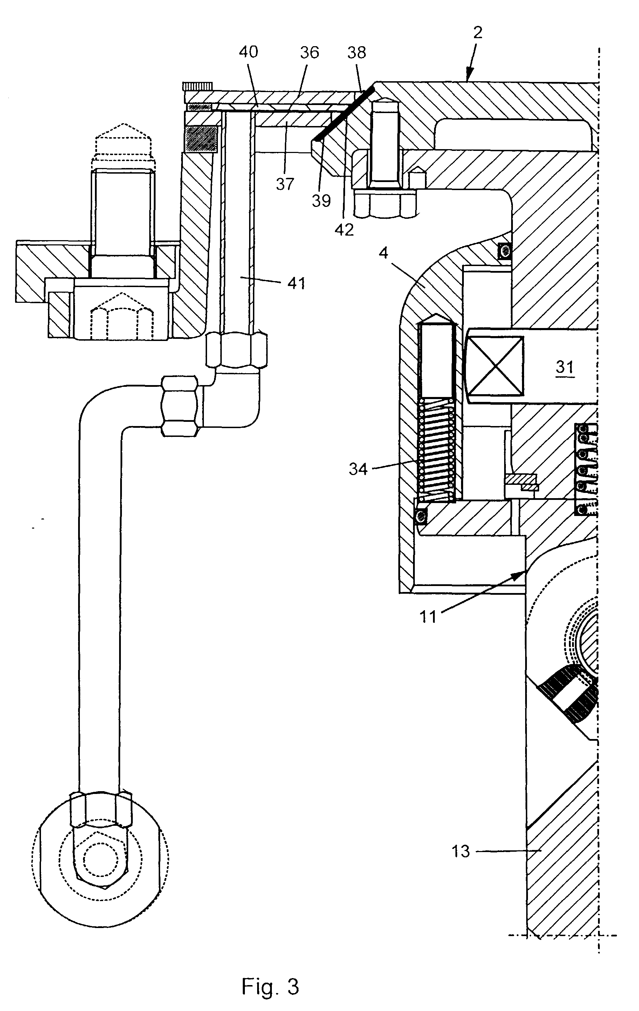

Gemäss Figur 3 wird die Öffnung 1 von zwei übereinanderliegenden Dichtringen 36 und 37 gebildet, wobei der Dichtring 36 einen geringeren Öffnungsdurchmesser als der Dichtring 37 ausbildet. Entsprechend verläuft auch einen Mantelfläche 38 des Ventiltellers 2 konisch und ist im gezeigten Ausführungsbeispiel mit einem Hartmetallauftrag 39 belegt.

Die Dichtringe 36 und 37 lassen zwischen sich einen Zwischenraum 40 frei, der mit einer Zuleitung 41 für ein Druckmedium in Verbindung steht.

Die Funktionsweise dieses Teils der Erfindung ist folgende:

Bei Erreichen der Schliesslage läuft der Ventilteller 2 gegen eine ballige Kante 42 des Dichtringes 36. Dieser wird unter dem Druck des Ventiltellers 2 etwas aufgebogen, so dass die Mantelfläche 38 auch gegen eine Kante des Dichtringes 37 gepresst wird. Allerdings wird dieser Dichtring 37 weniger stark aufgebogen.

Wird nun ein Druckmedium, bspw. eine Flüssigkeit oder ein Gas, über die Zuleitung 41 in den Zwischenraum 40 eingebracht, so presst dieses Druckmedium zusätzlich den Dichtring 37 gegen die Mantelfläche 38, so dass die Dichtung gegen aussen wesentlich verbessert ist. Über eine Messung des Druckabfalls resp. der Menge des Druckmediums kann ein Rückschluss auf den Zustand der Dichtung zwischen den Dichtringen 36, 37 den Ventilteller 2 gezogen werden.

| **Positionszahlenliste** | | | | | |
|---|---|---|---|---|---|
| 1 | Öffnung | 34 | Schraubenfeder | 67 | |
| 2 | Ventilteller | 35 | Sacklochbohrung | 68 | |
| 3 | Drehzapfen | 36 | Dichtung | 69 | |
| 4 | Gehäuse | 37 | Dichtung | 70 | |
| 5 | Schwenkarm | 38 | Mantelfläche | 71 | |
| 6 | Drehachse | 39 | Hartmetallauftrag | 72 | |
| 7 | Gehäuse | 40 | Zwischenraum | 73 | |
| 8 | Anschlag | 41 | Zuleitung | 74 | |
| 9 | Kniehebelmechanismus | 42 | ballige Kante | 75 | |
| 10 | Drehgelenk | 43 | | 76 | |
| 11 | Widerlager | 44 | | 77 | |
| 12 | Lager | 45 | | 78 | |
| 13 | Joch | 46 | | 79 | |
| 14 | Scheitel | 47 | | | |
| 15 | Lasche | 48 | | | |
| 16 | gelenkige Verbindung | 49 | | | |
| 17 | Hebel | 50 | | | |
| 18 | Leitung | 51 | | | |
| 19 | untere Austragsöffnung | 52 | | | |
| 20 | Dreheinrichtung | 53 | | | |
| 21 | Flansch | 54 | | | |
| 22 | Dichtung | 55 | | | |
| 23 | Dichtung | 56 | | | |
| 24 | Schraubenfeder | 57 | | | |
| 25 | Sackloch | 58 | | | |
| 26 | Sackloch | 59 | | | |
| 27 | Hülse | 60 | | | |
| 28 | Schraubenbolzen | 61 | | | |
| 29 | Lager | 62 | | | |
| 30 | Kulisse | 63 | | | |
| 31 | Führungsstift | 64 | | | |
| 32 | Sprengring | 65 | | | |
| 33 | Innenschulter | 66 | | z | Drehrichtung |

## Patentansprüche

1. Vorrichtung zum Öffnen und Verschliessen einer Öffnung (1), insbesondere einer Austragsöffnung für ein fliess- oder rieselfähiges Produkt, mit einem Ventilteller (2),
dadurch gekennzeichnet,
dass der Ventilteller (2) beim Öffnen der Öffnung (19 durch einen Kniehebelmechanismus (9) aus dem Bereich eines Produktstromes schwenkbar ist.

2. Vorrichtung zum Öffnen und Verschliessen einer Öffnung (1), insbesondere einer Austragsöffnung für ein fliess- oder rieselfähiges Produkt, mit einem Ventilteller (2), dadurch gekennzeichnet, dass dem Ventilteller (2) eine Dreheinrichtung (20) zum Drehen des Ventiltellers (2) beim Verschliessen der Öffnung (1) zugeordnet ist.

3. Vorrichtung zum Öffnen und Verschliessen einer Öffnung (1), insbesondere einer Austragsöffnung für ein fliess- oder rieselfähiges Produkt, mit einem Ventilteller (2), dadurch gekennzeichnet, dass die Öffnung (1) von zwei übereinanderliegenden Dichtungen (36, 37) gebildet wird, die einen offenen Zwischenraum (40) zur Öffnung (1) hin ausbilden, der mit einer Zuleitung (41) für ein Druckmedium in Verbindung steht.

4. Vorrichtung nach Anspruch 3, dadurch gekennzeichnet, dass der Ventilteller (2) eine im Querschnitt konisch oder kugelig verlaufende Mantelfläche (38) aufweist.

5. Vorrichtung nach Anspruch 4, dadurch gekennzeichnet, dass ein Durchmesser des ersten, unteren Dichtringes (37) grösser ist als ein Durchmesser des zweiten, oberen Dichtringes (36).

6. Vorrichtung nach Anspruch 5, dadurch gekennzeichnet, dass der zweite, obere Dichtring (36) eine ballige Ringkante aufweist und weniger stark aufbiegbar ist, als der erste untere Dichtring (37).

7. Vorrichtung nach wenigstens einem der Ansprüche 3 bis 6, dadurch gekennzeichnet, dass in dem Zwischenraum 40 zwischen den Dichtringen 36 und 37 ein gasförmiges oder flüssiges Druckmedium eingeführt wird.

8. Vorrichtung nach wenigstens einem der Ansprüche 2 bis 7, dadurch gekennzeichnet, dass der Ventilteller (2) sich mit einem Drehzapfen (3) gegen ein Widerlager (11) unter Zwischenschaltung einer Schraubenfeder (24) abstützt.

9. Vorrichtung nach Anspruch 8, dadurch gekennzeichnet, dass das Widerlager (11) mit einer Hülse (27) fest verbunden ist, in welcher der Drehzapfen (3) drehbar und axial gleitbar geführt ist.

10. Vorrichtung nach Anspruch 9, dadurch gekennzeichnet, dass die Hülse (27) eine Kulisse (30), beispielsweise einen Schrägschlitz, aufweist, in der ein in den Drehzapfen (3) radial eingesetzter Führungsstift (31) geführt ist.

11. Vorrichtung nach Anspruch 10, dadurch gekennzeichnet, dass die Hülse (27) in einem haubenartigen Gehäuse (4) bewegbar gelagert ist.

12. Vorrichtung nach Anspruch 11, dadurch gekennzeichnet, dass sich das Widerlager (11) über eine Schraubenfeder (34) gegen das Gehäuse (4) abstützt.

13. Vorrichtung nach Anspruch 12, dadurch gekennzeichnet, dass die Schraubenfeder (34) zwischen Widerlager (11) und Gehäuse (4) schwächer ist als die Schraubenfeder (24) zwischen Widerlager (11) und Drehzapfen (3).

14. Vorrichtung nach einem der Ansprüche 11 bis 13, dadurch gekennzeichnet, dass das Gehäuse (4) gegenüber dem Widerlager (11) und dem Drehzapfen (3) abgedichtet ist.

15. Vorrichtung nach wenigstens einem der Ansprüche 1 bis 14, dadurch gekennzeichnet, dass der Ventilteller (2) an einem Schwenkarm (5) angeordnet ist.

16. Vorrichtung nach Anspruch 15, dadurch gekennzeichnet, dass eine Drehachse (6) für den Schwenkarm (5) in Höhe etwa des Gehäuses (4) in Schliessstellung des Ventiltellers (2) angeordnet ist.

17. Vorrichtung nach einem der Ansprüche 1 bis 16, dadurch gekennzeichnet, dass der Ventilteller (2) über einen Hebel (17) mit einem Joch (13) gelenkig verbunden ist, welcher zwischen zwei Drehlagern (12) angeordnet ist.

18. Vorrichtung nach einem der Ansprüche 1 bis 17 dadurch gekennzeichnet, dass der Kniehebelmechanismus 9 über den Totpunkt bis zu einem mechanischen Anschlag bewegt wird, der das selbsttätige Öffnen des Ventiltellers 2 bei Ausfall des Antriebs verhindert.

19. Vorrichtung nach Anspruch 17, dadurch gekennzeichnet, dass die Drehlager (12) sich gegenüberliegend unterhalb der Öffnung (1) angeordnet sind und das Joch (13) in Öffnungslage des Ventiltellers (2) weitgehend aus dem Bereich des Produktstromes geschwenkt ist.

20. Vorrichtung nach Anspruch 17 oder 19, dadurch gekennzeichnet, dass ein Drehen des Jochs (13) in den Drehlagern (12) manuell, pneumatisch, hydraulisch oder elektrisch erfolgt.
